(19) Europäisches Patentamt

European Patent Office

Office européen des brevets

(11) **EP 2 129 971 B1**

(12) **EUROPEAN PATENT SPECIFICATION**

(45) Date of publication and mention
of the grant of the patent:
**21.12.2016 Bulletin 2016/51**

(21) Application number: **08723381.3**

(22) Date of filing: **10.03.2008**

(51) Int Cl.:
**F24D 19/10** *(2006.01)*  **G05D 23/19** *(2006.01)*

(86) International application number:
**PCT/KR2008/001344**

(87) International publication number:
**WO 2008/111780 (18.09.2008 Gazette 2008/38)**

(54) **METHOD FOR CONTROLLING HEATING APPARATUS**

VERFAHREN ZUR STEUERUNG EINER HEIZVORRICHTUNG

PROCÉDÉ DE RÉGULATION D'UN APPAREIL DE CHAUFFAGE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **15.03.2007 KR 20070025403**

(43) Date of publication of application:
**09.12.2009 Bulletin 2009/50**

(73) Proprietor: **Kyungdong One Corporation
Seoul 150-729 (KR)**

(72) Inventor: **KIM, Si-Hwan
Inchon 405-771 (KR)**

(74) Representative: **Fuchs Patentanwälte
Partnerschaft mbB
Patentanwälte
Postfach 46 60
65036 Wiesbaden (DE)**

(56) References cited:
**JP-A- 04 121 521      JP-A- 10 038 286
JP-A- 62 123 511      US-A- 4 410 132
US-A- 4 913 038       US-A- 5 575 194
US-A1- 2005 179 157**

## Description

## Technical Field

The present invention relates to a method of controlling a heating apparatus, and more particularly, to a method of controlling a heating apparatus that is capable of minimizing a difference between a room temperature set by a user and a room temperature measured when the heating apparatus operates.

## Background Art

Patent document US 4 ,410,132 discloses relevant prior art.

In general, a heating apparatus means an apparatus that supplies hot water to a heating device. The heating apparatus burns fuel, such as gas, in the heating apparatus, heats water using heat of combustion generated by the burning, and circulates the heated water through piping that is laid in floors of rooms to heat the rooms or supplies hot water using the heated water.

As a control method that allows a heating apparatus to maintain a room temperature at a temperature set by a user, there are the following methods: a method that measures a room temperature and turns on/off the heating apparatus; a method that measures a temperature of heated water and turns on/off a heating apparatus; and a method that operates a heating apparatus during a period of time set by a user and stops the operation of the heating apparatus during a predetermined period of time.

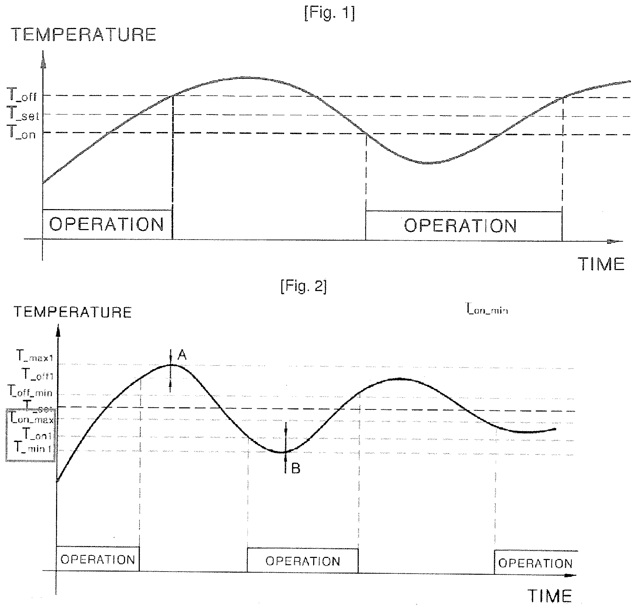

The control method that measures the room temperature and turns on/off the heating apparatus is a control method that compares a room temperature measured by a temperature sensor attached to a room temperature controller and a room temperature set by a user and then correspondingly turns on/off a heating apparatus. The process of controlling the heating apparatus using the control method is shown in FIG. 1.

FIG. 1 is a graph illustrating a variation process of a room temperature according to a method of controlling a heating apparatus according to the related art.

First, a user sets a desired room temperature using a room temperature controller that is installed indoor. In this case, the set room temperature becomes $T_{-set}$, and a heating-off temperature $T_{-off}$ and a heating-on temperature $T_{-on}$ are respectively set to have predetermined upper and lower temperature ranges on the basis of the room temperature $T_{-set}$ set by the user.

In this case, the heating-off temperature $T_{-off}$ and the heating-on temperature $T_{-on}$ are values that are input to the room temperature controller in advance. For example, when the user sets the desired room temperature to 25°C, the heating-off temperature $T_{-off}$ may be set to 26°C and the heating-on temperature $T_{-on}$ may be set to 24°C such that upper and lower temperature ranges are maintained within 1°C on the basis of the room temperature of 25°C.

If the heating apparatus operates, the room temperature increases. At this time, the room temperature is detected by a temperature sensor that is installed in the room temperature controller. If the room temperature detected by the temperature sensor reaches a temperature of 26°C that is the heating-off temperature $T_{-off}$, it is determined that the temperature reaches the room temperature set by the user, and the operation of the heating apparatus is stopped.

In this case, since the operation of the heating apparatus is stopped, heat transfer to the heating piping that is laid in the floors of rooms is also stopped, but heat accumulated in the floors of the rooms is continuously radiated to the indoor. As a result, the room temperature increases to a temperature (for example, 27°C) that is higher than the heating-off temperature $T_{-off}$ of 26°C and then decreases. As such, when the room temperature increases to a temperature that is higher than the set heating-off temperature $T_{-off}$, this is called overshoot.

When the heating apparatus stops its operation to decrease the room temperature and the room temperature reaches the heating-on temperature of 24°C, the heating apparatus operates again.

In this case, since the heating apparatus operates, heat is transferred to heating piping that is laid in the floors of the rooms, but a predetermined amount of time is nee ded until the temperature at the floors of the rooms increases to the room temperature set by the user. Thus, the room temperature decreases to a temperature (for example, 23°C) that is lower than the heating-on temperature $T_{-on}$ and then increases again. As such, when the room temperature decreases to a temperature that is lower than the set heating-on temperature $T_{-on}$, this is called undershoot.

When the overshoot and undershoot occur as described above, upper and lower variations of the room temperature $T_{-set}$ increase in a temperature range of 23°C to 27°C on the basis of the room temperature $T_{-set}$ of 25°C set by the user, and thus it is not possible to provide a comfortable indoor environment for the user.

## Disclosure of Invention

## Technical Problem

The present invention has been made to solve the above-described problems, and it is an object of the present invention to provide a method of controlling a heating apparatus that is capable of automatically controlling a heating-off temperature $T_{-off}$ and a heating-on temperature $T_{-on}$ according to an operation environment of the heating apparatus such that upper and lower variations of a room temperature set by a user are reduced on the basis of the room temperature, thereby allowing the user to feel comfortable.

## Technical Solution

The invention is defined by independent claim 1.

In order to achieve the above-described object, according to an aspect of the present invention, there is provided a method of controlling a heating apparatus. In this case, a temperature when the heating apparatus is operated to increase the room temperature and the operation of the heating apparatus is stopped is set as a temperature that is obtained by subtracting a heating-off temperature at a cycle immediately before a current cycle by a compensation value determined according to overshoot that has occurred at the cycle immediately before the current cycle, and a temperature when the operation of the heating apparatus is stopped to decrease the room temperature and the heating apparatus is operated is set as a temperature that is obtained by adding the heating-on temperature at the cycle immediately before the current cycle and a compensation value determined according to undershoot that has occurred at the cycle immediately before the current cycle, such that a difference between the measured room temperature and the room temperature set by the user is minimized.

Preferably, in the heating-off temperature, a minimum heating-off temperature is set as a temperature that is a predetermined temperature higher than the room temperature set by the user, and in the heating-on temperature, a maximum heating-on temperature is set as a temperature that is a predetermined temperature lower than the room temperature set by the user.

When the room temperature is controlled at the minimum heating-off temperature and the overshoot occurs, a control operation may be performed to reduce the amount of heat produced by the heating apparatus. In this case, it is preferable that a control operation be performed to reduce the amount of heat produced by the heating apparatus in proportion to the amount of overshoot.

## Advantageous Effects

As specifically described above, according to the method of controlling a heating apparatus according to the present invention, it is possible to automatically control a heating-off temperature and a heating-on temperature according to an operation environment of the heating apparatus such that upper and lower variations of a room temperature are reduced, thereby providing a comfortable indoor environment for a user who uses the heating apparatus.

## Brief Description of the Drawings

FIG. 1 is a graph illustrating a variation process of a room temperature according to a method of controlling a heating apparatus according to the related art.

FIG. 2 is a graph illustrating a variation process of a room temperature when a heating apparatus operates according to a method of controlling a heating apparatus according to an embodiment of the present invention.

FIG. 3 is a flowchart illustrating a method of controlling a heating apparatus according to an embodiment of the present invention.

FIG. 4 is a graph illustrating a control method that reduces the amount of heat according to an embodiment of the present invention.

FIG. 5 is a graph illustrating a variation of a room temperature according to a method of controlling a heating apparatus according to an embodiment of the present invention.

FIG. 6 is a schematic diagram illustrating an example of a heating system to which a method of controlling a heating apparatus according to an embodiment of the present invention is applied.

## Best Mode for Carrying Out the Invention

Hereinafter, the structure and function of the preferred embodiments of the present invention will be described in detail with reference to the accompanying drawings.

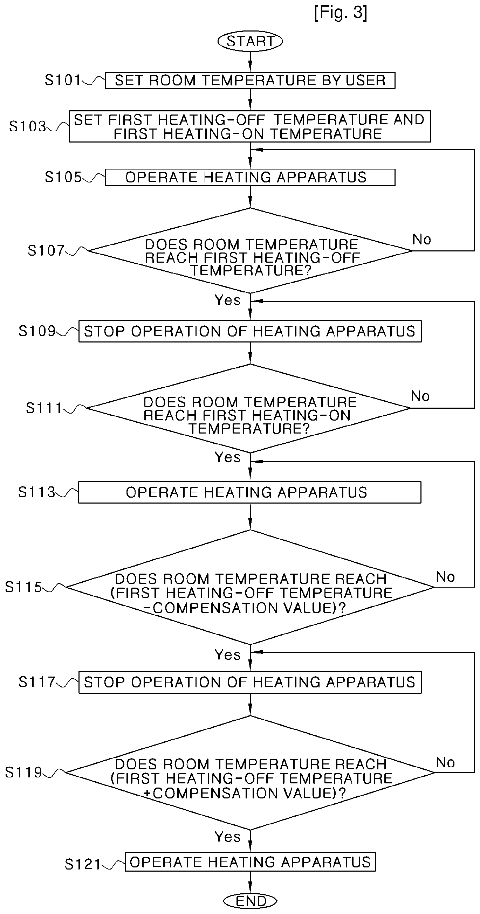

FIG. 2 is a graph illustrating a variation process of a room temperature when a heating apparatus operates according to a method of controlling a heating apparatus according to an embodiment of the present invention. FIG. 3 is a flowchart illustrating a method of controlling a heating apparatus according to an embodiment of the present invention.

The present invention relates to implementing a method of controlling a heating apparatus that, when the heating apparatus is turned on/off according to a compared result that is obtained by comparing a room temperature measured by a temperature sensor installed in a room temperature controller and a room temperature set by a user, enables heating to be maintained such that there is a minimal temperature difference on the basis of the room temperature set by the user.

First, a user sets a desired room temperature using a room temperature controller installed indoor (S101). The set room temperature is represented as $T_{-set}$ in FIG. 2, and may become, for example, 25°C.

If the room temperature $T_{-set}$ is set by the user, first, a first heating-off temperature $T_{-off1}$ and a first heating-on temperature $T_{-on1}$ are respectively set to have predetermined upper and lower temperature ranges on the basis of the room temperature $T_{-set}$ (S103). For example, the first heating-off temperature $T_{-off1}$ may become 25.5°C and the first heating-on temperature $T_{-on1}$ may become 24.5°C.

If the user sets the room temperature and the heating apparatus operates, the room temperature increases. The heating apparatus continuously operates until the room temperature reaches the first heating-off temperature $T_{-off1}$ (S105).

If the heating apparatus operates and the room temperature reaches the first heating-off temperature $T_{-off1}$ (S107), the operation of the heating apparatus is stopped (S109).

Here, even though the operation of the heating apparatus is stopped, a large amount of heat that is supplied when the heating apparatus is operated is accumulated in the floors of rooms. As a result, heat is continuously radiated from the floors to the inside of the rooms, which causes overshoot to occur, in which the room temperature increases to a temperature higher than the first heating-off temperature $T_{-off1}$.

At this time, the temperature sensor measures a maximum temperature $T_{-max1}$ of the room temperature that increases due to overshoot, and a control unit computes a difference between the maximum temperature $T_{-max1}$ and the first heating-off temperature $T_{-off1}$, that is, the amount of overshoot, and defines a computed value as $A_1$.

A compensation value is determined according to the overshoot that has occurred at the first cycle, and a heating-off temperature $T_{-off2}$ at a next cycle is determined using the determined compensation value.

[Equation 1]

$$T_{-off2} = T_{-off1} - (A_1/2)$$

[Equation 2]

$$A_1 = T_{-max1} - T_{-off1}$$

That is, the compensation value that is determined according to the overshoot that has occurred at the first cycle is defined as $(A_1/2)$, and a value that is obtained by subtracting the first heating-off temperature $T_{-off1}$ by the compensation value is defined as a heating-off temperature at a next cycle. In this case, a compensation value may be defined as having various values, such as $(A_1/2)$ or $(A_1/3)$.

If the operation of the heating apparatus is stopped, the room temperature decreases. If the room temperature reaches the first heating-on temperature $T_{-on1}$ (S111), the heating apparatus operates again (S113).

In this case, the room temperature does not immediately increase due to specific heat of indoor air but becomes lower than the first heating-on temperature $T_{-on1}$, which causes undershoot. At this time, the temperature sensor measures a minimum temperature $T_{-min1}$ of the room temperature that decreases due to the undershoot, and the control unit computes a difference between the minimum temperature $T_{-min1}$ and the first heating-on temperature $T_{-on1}$, that is, the amount of undershoot, and defines a computed value as $B_1$.

A compensation value is determined according to undershoot that has occurred at the first cycle, and a heating-on temperature $T_{-on2}$ at a next cycle is determined using the determined compensation value.

[Equation 3]

$$T_{-on2} = T_{-on1} + (B_1/2)$$

[Equation 4]

$$B_1 = T_{-on1} - T_{-min1}$$

That is, the compensation value that is determined according to the undershoot that has occurred at the first cycle is defined as $B_1/2$, and a value that is obtained by adding the first heating-on temperature $T_{-on1}$ and the compensation value is defined as a heating-on temperature at a next cycle. In this case, the compensation value may be defined as having various values, such as $B_1/2$ or $B_1/3$.

The heating apparatus operates and the room temperature increases again. In this case, if the temperature sensor detects that the room temperature reaches the heating-off temperature (that is, $T_{-off2}$ determined in Equation 1) at the second cycle, the operation of the heating apparatus is stopped (S115 and S117).

As such, the operation of the heating apparatus is stopped at the temperature that is obtained by subtracting the first heating-off temperature by the compensation value $A_1/2$ determined according to the amount of overshoot $A_1$ that has occurred at the first cycle. Thus, a maximum temperature $T_{-max2}$ of the room temperature becomes lower at the second cycle. Accordingly, it is possible to resolve the problem according to the related art in that a variation in room temperature is large.

At this time, the temperature sensor measures the maximum temperature $T_{-max2}$ of the room temperature that increases due to overshoot at the second cycle, and the control unit computes a difference between the maximum temperature $T_{-max2}$ and the second heating-off temperature $T_{-off2}$, that is, the amount of overshoot, and defines a computed value as $A_2$.

A compensation value $A_2/2$ is determined according to the overshoot that has occurred at the second cycle, and a heating-off temperature $T_{-off3}$ at a next cycle is determined using the determined compensation value.

[Equation 5]

$$T_{-off3} = T_{-off2} - (A_2/2)$$

**[Equation 6]**

$$A_2 = T_{max2} - T_{off2}$$

As the operation of the heating apparatus is stopped, the room temperature decreases. In this case, if the room temperature reaches the second heating-on temperature $T_{on2}$, the heating apparatus operates again (S119 and S121).

At this time, the temperature sensor measures a minimum temperature $T_{min2}$ of the room temperature that decreases due to the undershoot at the second cycle, and the control unit computes a difference between the minimum temperature $T_{}$ and the second heating-on temperature $T_{on2}$, that is, the amount of undershoot, and defines a computed value as $B_2$.

A compensation value $B_2/2$ is determined according to the undershoot that has occurred at the second cycle, and a heating-on temperature $T_{on3}$ at a next cycle is determined using the compensation value.

**[Equation 7]**

$$T_{on3} = T_{on2} + (B_2/2)$$

**[Equation 8]**

$$B_2 = T_{on2} - T_{min2}$$

If the above-described method is used to determine the heating-off temperature $T_{off}$ and the heating-on temperature $T_{on}$ and the start/stop operation of the heating apparatus is repeated, it is possible to reduce a difference between the room temperature $T_{set}$ set by the user and the room temperature measured by the temperature sensor. As a result, it is possible to provide a comfortable indoor environment for the user.

Further, the amounts of overshoot and undershoot that occur when the heating apparatus operates depend on an installation environment of the heating apparatus. Thus, it is difficult to accurately predict the amounts of overshoot and undershoot at the time of designing the heating apparatus. Accordingly, if using the compensation values that are determined according to the amounts of overshoot and undershoot measured by using the above-described method, it becomes possible to automatically set the heating-off temperature $T_{off}$ and the heating-on temperature $T_{on}$, which reduce a variation in the room temperature.

When the control operation is performed according to the above-described method, Equations 1 to 8 that compute the heating-off temperature and the heating-on temperature may be represented by the following general Equations.

$$T_{off(n)} = T_{off(n-1)} - (A_{(n-1)}/2)$$

$$T_{on(n)} = T_{on(n-1)} + (B_{(n-1)}/2)$$

$$A_{(n-1)} = T_{max(n-1)} - T_{off(n-1)}$$

$$B_{(n-1)} = T_{on(n-1)} - T_{min(n-1)}$$

In this case, (n) indicates a value at a current controlled cycle, and (n-1) indicates a value determined at a cycle immediately before the current controlled cycle.

Meanwhile, in order to control the heating-off temperature and the heating-on temperature without error, the heating-off temperature needs to be controlled to be higher than the room temperature $T_{set}$ set by the user, and the heating-on temperature needs to be controlled to be lower than the room temperature $T_{set}$ set by the user.

Accordingly, the heating-off temperature is preferably controlled to be higher than the minimum heating-off temperature $T_{off\_min}$ that is higher than the room temperature $T_{set}$ set by the user by a predetermined temperature. For example, when the room temperature $T_{set}$ set by the user is 25°C, the minimum heating-off temperature $T_{off\_min}$ may be defined as 25.2°C.

The heating-on temperature is preferably controlled to be lower than the maximum heating-on temperature $T_{on\_max}$ that is lower than the room temperature $T_{set}$ set by the user by a predetermined temperature. For example, when the room temperature $T_{set}$ set by the user is 25°C, the maximum heating-on temperature $T_{on\_max}$ may be defined as 24.8°C.

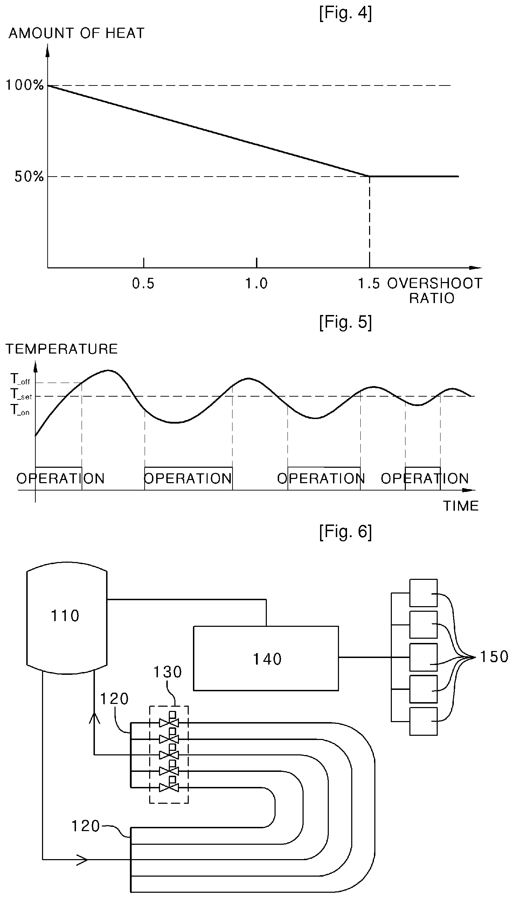

FIG. 4 is a graph illustrating a control method that reduces the amount of heat according to an embodiment of the present invention.

Even when temperature control is performed such that the room temperature is maintained at the minimum heating-off temperature $T_{off\_min}$, if overshoot occurs, it is possible to reduce a temperature variation by reducing the amount of heat produced by the heating apparatus.

That is, when it is determined that the heating-off temperature $T_{off}$ is continuously decreased to the minimum heating-off temperature $T_{off\_min}$ and overshoot occurs even at the minimum heating-off temperature $T_{off\_min}$, the control unit controls a gas valve (not shown in the drawings) that controls the amount of gas supplied and reduces the pressure of gas supplied (that is, reduces the amount of heat), thereby preventing overshoot from occurring.

In this case, in regards to a decreasing rate of the amount of heat, the amount of heat may be decreased in proportion to the amount of overshoot, as shown in FIG. 4. That is, when the overshoot does not occur, the amount of heat is controlled to become 100%, and when the overshoot ratio exceeds a predetermined ratio, the amount of heat is controlled to become 50%. Here, the overshoot ratio may be defined as $A/(T_{-off} - T_{-set})$.

FIG. 5 is a graph illustrating a variation of a room temperature according to a method of controlling a heating apparatus according to an embodiment of the present invention.

As shown in FIG. 5, if controlling a heating apparatus using the method of controlling a heating apparatus according to the embodiment of the present invention with the above-described structure, upper and lower variations of the room temperature can be reduced. A graph having small amplitude is formed on the basis of the room temperature $T_{-set}$ set by the user.

FIG. 6 is a schematic diagram illustrating an example of a heating system to which a method of controlling a heating apparatus according to an embodiment of the present invention is applied.

The heating system includes a heating apparatus 110 that supplies water heated by burning fuel, a heated water distributing unit 120 that distributes the heated water supplied by the heating apparatus 110 into individual rooms, a valve 130 that controls supply and stop of the heated water distributed by the heated water distributing unit 120 to the individual rooms, a valve controller 140 that controls driving of the valve 130, and a room temperature controller 150 that is connected to the valve controller 140 and sets a predetermined room temperature for each of the rooms.

The valve 130 may be an on/off-typed valve or a proportional control valve that controls the amount of heated water supplied.

The heating apparatus 110, the valve controller 140, and the room temperature controller 150 are connected to each other through communication lines, and exchange necessary data with each other.

If a current temperature is lower than the room temperature that is set by the room temperature controller 150, the valve controller 140 transmits a signal to the heating apparatus 110, and drives the valve 130 to increase the temperature of a corresponding room.

In this case, a method of controlling overshoot and undershoot that occur due to an increase and a decrease in the room temperature is the same as the above-described control method.

A method of controlling the temperature of each room in a district heating system and a central heating system that externally supply heated water also controls overshoot and undershoot using the above-described control method, and can help to provide a comfortable indoor environment for the user.

It will be apparent to those skilled in the art that various modifications and changes may be made without departing from the present invention. Therefore, it should be understood that the above embodiments are not limitative, but illustrative in all aspects.

**Claims**

1. A method of controlling a heating apparatus (110) that controls the start/stop operation of the heating apparatus (110) on the basis of a room temperature ($T_{-set}$) set by a user,

   wherein for a given cycle a heating-off temperature, at which the operation of the heating apparatus (110) is stopped, is set as a temperature that is obtained by subtracting a compensation value determined according to the temperature overshoot (A) that has occurred in the cycle immediately preceding the current cycle from the heating-off temperature from the said preceding cycle,

   wherein for a given cycle a heating-on temperature, at which the operation of the heating apparatus is started, is set as a temperature that is obtained by adding a compensation value determined according to the temperature undershoot that has occurred in the cycle immediately preceding the current cycle to the heating-on temperature from the said preceding cycle,

   whereby a difference between the measured room temperature ($T_{-set}$) and the room temperature set by the user is minimized, **characterized in that**

   i) a minimum heating-off temperature ($T_{-off-min}$) is set as a temperature that is a predetermined temperature higher than the room temperature ($T_{-set}$) set by the user, whereby the heating-off temperature that is compensated by the compensation value determined according to overshoot (A) is controlled not to be less than the minimum heating-off temperature ($T_{-off-min}$) and

   ii) a maximum heating-on temperature ($T_{-on-max}$) is set as a temperature that is a predetermined temperature lower than the room temperature ($T_{-set}$) set by the user, whereby the heating-on temperature that is compensated by the compensation value determined according to undershoot (B) is controlled not to be higher than the maximum-on temperature ($T_{-on-max}$).

2. The method of claim 1 wherein, when the room temperature ($T_{-set}$) is controlled at the minimum heating-off temperature ($T_{-off-min}$) and the overshoot (A) occurs, a control operation is performed to reduce the amount of heat produced by the heating apparatus (110).

3. The method of claim 2, wherein, when the room temperature ($T_{-set}$) is controlled at the minimum heating-off temperature ($T_{-off-min}$) and the overshoot (A) occurs, a control operation is performed to reduce the amount of heat produced by the heating apparatus (110) in proportion to the amount of overshoot (A).

## Patentansprüche

1. Verfahren zum Steuern einer Heizvorrichtung (110), die den Start-/StoppVorgang der Heizvorrichtung (110) auf der Basis einer durch einen Benutzer gesetzten Raumtemperatur ($T_{\_set}$) steuert;

wobei für einen vorgegebenen Zyklus eine Heizbetriebausschalttemperatur, bei der der Betrieb der Heizvorrichtung (110) gestoppt wird, als eine Temperatur gesetzt wird, die durch Subtrahieren eines Kompensationswertes, der gemäß einer Temperaturüberschreitung (A) bestimmt wird, die in dem dem aktuellen Zyklus unmittelbar vorangehenden Zyklus aufgetreten ist, von der Heizbetriebausschalttemperatur des vorangehenden Zyklus erhalten wird,

wobei für einen vorgegebenen Zyklus eine Heizbetriebeinschalttemperatur, bei der der Betrieb der Heizvorrichtung gestartet wird, als eine Temperatur gesetzt wird, die durch Addieren eines Kompensationswertes, der gemäß einer Temperaturunterschreitung bestimmt wird, die in dem dem aktuellen Zyklus unmittelbar vorangehenden Zyklus aufgetreten ist, zur Heizbetriebeinschalttemperatur des vorangehenden Zyklus erhalten wird,

so dass eine Differenz zwischen der gemessenen Raumtemperatur ($T_{\_set}$) und der durch den Benutzer gesetzten Raumtemperatur minimiert wird;

**dadurch gekennzeichnet, dass**

i) eine minimale Heizbetriebausschalttemperatur ($T_{\_off\_min}$) als eine Temperatur gesetzt wird, die um eine vorgegebene Temperatur höher ist als die durch den Benutzer gesetzte Raumtemperatur ($T_{\_set}$), so dass die Heizbetriebausschalttemperatur, die durch den gemäß der Temperaturüberschreitung (A) bestimmten Kompensationswert kompensiert wird, derart gesteuert wird, dass sie nicht kleiner ist als die minimale Heizbetriebausschalttemperatur ($T_{\_off\_min}$); und

ii) eine maximale Heizbetriebeinschalttemperatur ($T_{\_on\_max}$) als eine Temperatur gesetzt wird, die um eine vorgegebene Temperatur niedriger ist als die durch den Benutzer gesetzte Raumtemperatur ($T_{\_set}$), so dass die Heizbetriebeinschalttemperatur, die durch den gemäß der Temperaturunterschreitung (B) bestimmten Kompensationswert kompensiert wird, derart gesteuert wird, dass sie nicht höher ist als die maximale Heizbetriebeinschalttemperatur ($T_{\_on\_max}$).

2. Verfahren nach Anspruch 1, wobei, wenn die Raumtemperatur ($T\_set$) bei der minimalen Heizbetriebausschalttemperatur ($T\_off\_min$) gesteuert wird und die Temperaturüberschreitung (A) auftritt, ein Steuervorgang ausgeführt wird, um die durch die Heizvorrichtung (110) erzeugte Wärmemenge zu reduzieren.

3. Verfahren nach Anspruch 2, wobei, wenn die Raumtemperatur ($T\_set$) bei der minimalen Heizbetriebausschalttemperatur ($T\_off\_min$) gesteuert wird und die Temperaturüberschreitung (A) auftritt, ein Steuervorgang ausgeführt wird, um die durch die Heizvorrichtung (110) erzeugte Wärmemenge proportional zum Maß der Temperaturüberschreitung (A) zu reduzieren.

## Revendications

1. Procédé de commande d'un appareil de chauffage (110) qui commande le fonctionnement de marche/arrêt de l'appareil de chauffage (110) sur la base d'une température ambiante (T_set) fixée par un utilisateur,

dans lequel pour un cycle donné une température d'arrêt de chauffage, à laquelle le fonctionnement de l'appareil de chauffage (110) est arrêté, est fixée comme une température qui est obtenue en soustrayant une valeur de compensation déterminée en fonction du dépassement de température (A) qui s'est produit dans le cycle précédant immédiatement le cycle actuel à la température d'arrêt de chauffage dudit cycle précédent,

dans lequel pour un cycle donné une température d'activation de chauffage, à laquelle le fonctionnement de l'appareil de chauffage (110) est démarré, est fixée comme une température qui est obtenue en ajoutant une valeur de compensation déterminée en fonction du dépassement de température qui s'est produit dans le cycle précédant immédiatement le cycle actuel à la température d'arrêt de chauffage dudit cycle précédent,

grâce à quoi une différence entre la température ambiante mesurée (T_set) et la température ambiante fixée par l'utilisateur est minimisée, **caractérisé en ce que**

i) une température d'arrêt de chauffage minimale (T_off_min) est fixée comme une température qui est une température prédéterminée supérieure à la température ambiante (T_set) fixée par l'utilisateur, grâce à quoi la température d'arrêt de chauffage qui est compensée par la valeur de compensation déterminée en fonction du dépassement (A) est commandée pour ne pas être inférieure à la température d'arrêt de chauffage minimale (T_off_min) et

ii) une température d'activation de chauffage (T_on_max) est fixée comme une température qui est une température prédéterminée inférieure à la température ambiante (T_set) fixée par l'utilisateur, grâce à quoi la température d'activation de chauffage qui est compensée par la valeur de compensation déterminée en fonction du dépassement (B) est commandée pour ne pas être supérieure à la température d'activation maximale (T_on_max).

2. Procédé selon la revendication 1
dans lequel, lorsque la température ambiante (T_set) est commandée à la température d'arrêt de chauffage minimale (T_off_min) et que le dépassement (A) se produit, une opération de commande est réalisée pour réduire la quantité de chaleur produite par l'appareil de chauffage (110).

3. Procédé selon la revendication 2,
dans lequel, lorsque la température ambiante (T_set) est commandée à la température d'arrêt de chauffage minimale (T_off_min) et que le dépassement (A) se produit, une opération de commande est réalisée pour réduire la quantité de chaleur produite par l'appareil de chauffage (110) en proportion de la valeur du dépassement (A).

[Fig. 1]

TEMPERATURE

T_off
T_set
T_on

| OPERATION | | OPERATION |

TIME

[Fig. 2]

TEMPERATURE

L_on_min

T_max1
T_off1
T_off_min
T_set
L_on_max
T_on1
T_min1

A

B

| OPERATION | | OPERATION | | OPERATION |

TIME

[Fig. 3]

START

S101 — SET ROOM TEMPERATURE BY USER

S103 — SET FIRST HEATING-OFF TEMPERATURE AND FIRST HEATING-ON TEMPERATURE

S105 — OPERATE HEATING APPARATUS

S107 — DOES ROOM TEMPERATURE REACH FIRST HEATING-OFF TEMPERATURE? — No

Yes

S109 — STOP OPERATION OF HEATING APPARATUS

S111 — DOES ROOM TEMPERATURE REACH FIRST HEATING-ON TEMPERATURE? — No

Yes

S113 — OPERATE HEATING APPARATUS

S115 — DOES ROOM TEMPERATURE REACH (FIRST HEATING-OFF TEMPERATURE -COMPENSATION VALUE)? — No

Yes

S117 — STOP OPERATION OF HEATING APPARATUS

S119 — DOES ROOM TEMPERATURE REACH (FIRST HEATING-OFF TEMPERATURE +COMPENSATION VALUE)? — No

Yes

S121 — OPERATE HEATING APPARATUS

END

[Fig. 4]

AMOUNT OF HEAT

[Fig. 5]

TEMPERATURE

[Fig. 6]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4410132 A